# EUROPEAN PATENT APPLICATION

(11) **EP 4 668 697 A1**
(43) Date of publication of application: **24.12.2025**
(21) Application number: 23953390.4
(22) Date of filing: 26.09.2023
(51) Int. Cl.: H04L 45/00

(54) **PACKET FORWARDING METHOD AND APPARATUS, NETWORK DEVICE, AND STORAGE MEDIUM**

(71) Applicant: New H3C Technologies Co., Ltd., Hangzhou, Zhejiang 310052 (CN)
(72) Inventor: WANG, Wei, Beijing 100102 (CN)
(74) Representative: IPAZ
(86) International application number: PCT/CN2023/121511
(87) International publication number: WO 2025/065229

(57) **Abstract**

The present application relates to the technical field of network communications, and provides a packet forwarding method and apparatus, a network device, and a storage medium. The method is applied to a first network device, and the method comprises: receiving a service packet sent by a user-side device; caching the service packet into a scheduling queue corresponding to a deterministic flow to which the service packet belongs; and when the scheduling cycle or the scheduling queue is reached, sending a combined packet to a second network device, the combined packet comprising an IPv6 header, a segment routing header (SRH), and a plurality of service packets in the scheduling queue. Thus, the bandwidth utilization rate can be improved.

## Description

### TECHNICAL FIELD

The present disclosure relates to the technical field of network communication, in particular to a packet forwarding method and apparatus, a network device, and a storage medium.

### BACKGROUND

With the development of the industrial internet and metaverse, remote interactive services have put forward more stringent requirements for network delay, jitter, and packet loss. A deterministic internet technology has become a wide area network solution to meet the above requirements.

The deterministic internet refers to a network that provides deterministic service guarantee capabilities for the service carried on the network. It can guarantee deterministic delay, delay jitter, packet loss rate and other indicators of the service. The deterministic internet technology is a new type of Quality of Service (QoS) assurance technology.

Currently, the deterministic internet can be implemented based on a Cyclic Specific Queuing and Forwarding (CSQF) mechanism, and a Software Defined Network (SDN) controller can plan a forwarding path of a deterministic traffic packet in the deterministic internet, and specify CSQF forwarding resources of each hop network device in the deterministic internet, so that the network device forward the packet according to the specified CSQF forwarding resources.

In the CSQF mechanism, a packet sent in each Cycle is a SRv6 packet. However, due to a long header of the SRv6 packet, a large amount of CSQF forwarding resources are used to forward the header of the SRv6 packet, which seriously affects the bandwidth utilization rate of CSQF forwarding.

### SUMMARY

The object of examples of the present disclosure is to provide a packet forwarding method and apparatus, network device and storage medium, which can improve the bandwidth utilization rate of CSQF forwarding. The specific technical solutions are as follows:
In a first aspect, an example of the present disclosure provides a packet forwarding method, which is applied to a first network device, including:
receiving a traffic packet sent by a user-side device;
buffering the traffic packet into a scheduling queue corresponding to a deterministic flow to which the traffic packet belongs;
when a scheduling cycle of the scheduling queue is reached, sending a combined packet to a second network device, wherein the combined packet includes an IPv6 header, a segment routing header SRH and multiple traffic packets in the scheduling queue.

In a possible implementation, the combined packet further includes an extension header, and the extension header includes a packet length of each traffic packet in the combined packet.

In a possible implementation, the SRH includes a next header field indicating that a next header after the SRH is the extension header.

In a possible implementation, a size of the combined packet is less than or equal to a maximum transmission unit MTU.

In a possible implementation, the extension header further includes a next header field and an extension header length field;
the next header field and the extension header length field each occupy 8 bits;
each packet length included in the extension header occupies 16 bits;
in a case where a total number of bits occupied by the next header field, the extension header length field and individual packet lengths included in the extension header is not an integral multiple of 32 bits, the extension header further includes an end field, wherein the end field occupies 16 bits and has a value of 0.

In a second aspect, an example of the present disclosure provides a packet forwarding method, which is applied to a third network device, including:
receiving a combined packet, wherein the combined packet includes an IPv6 header, a segment routing header SRH, and multiple traffic packets which belong to a same deterministic flow;
forwarding the multiple traffic packets to a user-side device.

In a possible implementation, the combined packet further includes an extension header, and the extension header includes a packet length of each traffic packet in the combined packet; after receiving the combined packet, the method further includes:
acquiring the multiple traffic packets from the combined packet based on the packet length of each traffic packet included in the extension header.

In a possible implementation, the SRH includes a next header field indicating that a next header after the SRH is the extension header.

In a possible implementation, a size of the combined packet is less than or equal to a maximum transmission unit MTU.

In a possible implementation, the extension header further includes a next header field and an extension header length field;
the next header field and the extension header length field each occupy 8 bits;
each packet length included in the extension header occupies 16 bits;
in a case where a total number of bits occupied by the next header field, the extension header length field and individual packet lengths included in the extension header is not an integral multiple of 32 bits, the extension header further includes an end field, wherein the end field occupies 16 bits and has a value of 0.

In a third aspect, an example of the present disclosure provides a packet forwarding , which is applied to a first network device, including:
a receiving module, to receive a traffic packet sent by a user-side device;
a buffering module, to buffer the traffic packet into a scheduling queue corresponding to a deterministic flow to which the traffic packet belongs;
a sending module, to send a combined packet to a second network device when a scheduling cycle of the scheduling queue is reached, wherein the combined packet includes an IPv6 header, a segment routing header SRH, and multiple traffic packets in the scheduling queue.

In a possible implementation, the combined packet further includes an extension header, and the extension header includes a packet length of each traffic packet in the combined packet.

In a possible implementation, the SRH includes a next header field indicating that a next header after the SRH is the extension header.

In a possible implementation, a size of the combined packet is less than or equal to a maximum transmission unit MTU.

In a possible implementation, the extension header further includes a next header field and an extension header length field;
the next header field and the extension header length field each occupy 8 bits;
each packet length included in the extension header occupies 16 bits;
in a case where a total number of bits occupied by the next header field, the extension header length field and individual packet lengths included in the extension header is not an integral multiple of 32 bits, the extension header further includes an end field, wherein the end field occupies 16 bits has a value of 0.

In a fourth aspect, an example of the present disclosure provides a packet forwarding apparatus, which is applied to a third network device, including:
a receiving module, to receive a combined packet, wherein the combined packet includes an IPv6 header, a segment routing header SRH, and multiple traffic packets which belong to a same deterministic flow;
a forwarding module, to forward the multiple traffic packets to a user-side device.

In a possible implementation, the combined packet further includes an extension header, and the extension header includes a packet length of each traffic packet in the combined packet; the apparatus further includes:
an acquisition module, to acquire the multiple traffic packets from the combined packet based on the packet length of each traffic packet included in the extension header.

In a possible implementation, the SRH includes a next header field indicating that a next header after the SRH is the extension header r.

In a possible implementation, a size of the combined packet is less than or equal to a maximum transmission unit MTU.

In a possible implementation, the extension header further includes a next header field and an extension header length field;
the next header field and the extension header length field each occupy 8 bits;
each packet length included in the extension header occupies 16 bits;
in a case where a total number of bits occupied by the next header field, the extension header length field and individual packet lengths included in the extension header is not an integral multiple of 32 bits, the extension header further includes an end field, wherein the end field occupies 16 bits and has a value of 0.

In a fifth aspect, an example of the present disclosure provides a network device, including:
a processor;
a transceiver;
a machine-readable storage medium, having stored therein machine-executable instructions that can be executed by the processor, wherein the machine-executable instructions cause the processor to :
   receive a traffic packets sent by a user-side device;
   buffer the traffic packet into a scheduling queue corresponding to a deterministic flow to which the traffic packet belongs;
   when a scheduling cycle of the scheduling queue is reached, send a combined packet to a second network device, wherein the combined packet includes an IPv6 header, a segment routing header SRH, and multiple traffic packets in the scheduling queue.

In a possible implementation, the combined packet further includes an extension header, and the extension header includes a packet length of each traffic packet in the combined packet.

In a possible implementation, the SRH includes a next header field indicating that a next header after the SRH is the extension header.

In a possible implementation, a size of the combined packet is less than or equal to a maximum transmission unit MTU.

In a possible implementation, the extension header further includes a next header field and an extension header length field;
the next header field and the extension header length field each occupy 8 bits;
each packet length included in the extension header occupies 16 bits;
in a case where a total number of bits occupied by the next header field, the extension header length field and individual packet lengths included in the extension header is not an integral multiple of 32 bits, the extension header further includes an end field, wherein the end field occupies 16 bits and has a value of 0.

In a sixth aspect, examples of the present disclosure provide a network device, including:
a processor;
a transceiver;
a machine-readable storage medium, having stored therein machine-executable instructions that can be executed by the processor, wherein the machine-executable instructions cause the processor to:
   receive a combined packet, wherein the combined packet includes an IPv6 header, a segment routing header SRH, and multiple traffic packets which belong to a same deterministic flow;
   forward the multiple traffic packets to a user-side device.
   In a possible implementation, the combined packet further includes an extension header, and the extension header includes a packet length of each traffic packet in the combined packet;
   the machine-executable instructions further cause the processor to:
      acquire the multiple traffic packets from the combined packet based on the packet length of each traffic packet included in the extension header.

In a possible implementation, the SRH includes a next header field indicating that a next header after the SRH is the extension header.

In a possible implementation, the size of the combined packet is less than or equal to a maximum transmission unit MTU.

In a possible implementation, the extension header further includes a next header field and an extension header length field;
the next header field and the extension header length field each occupy 8 bits;
each packet length included in the extension header occupies 16 bits;
in a case where a total number of bits occupied by the next header field, the extension header length field and individual packet lengths included in the extension header is not an integral multiple of 32 bits, the extension header further includes an end field, wherein the end field occupies 16 bits and has a value of 0.

In a seventh aspect, an example of the present disclosure provides a machine-readable storage medium, having stored therein machine-executable instructions that, when called and executed by a processor, cause the processor to carry out the method in the first aspect or the second aspect.

In an eighth aspect, an example of the present disclosure provides a computer program product, which causes a processor to carry out the method in the first aspect or the second aspect.

With the above technical solution, the first network device can buffer the traffic packet into a scheduling queue corresponding to a deterministic flow to which the traffic packet belongs, and send a combined packet to a second network device when a scheduling cycle of the scheduling queue is reached, wherein the combined packet includes an IPv6 header, a SRH, and multiple traffic packets in the scheduling queue. In this way, there is no need to encapsulate the IPv6 header and SRH for each traffic packet separately, so that the multiple traffic packets can share one IPv6 header and one SRH, which reduces the transmission bandwidth occupied by the IPv6 header and the SRH and improves the bandwidth utilization rate.

### BRIEF DESCRIPTION OF THE DRAWINGS

The drawings described here provide a further understanding of and constitute a part of the present disclosure. The schematic examples and descriptions thereof of the present disclosure are used to explain the present disclosure and do not constitute an improper limitation on the present disclosure.
Figure 1 is a schematic diagram of a forwarding mechanism for a deterministic flow provided by an example of the present disclosure;
Figure 2 is a schematic diagram of a network architecture of a deterministic internet provided by an example of the present disclosure;
Figure 3 is a schematic structure diagram of a SRv6 packet provided by an example of the present disclosure;
Figure 4 is a schematic flow chart of a packet forwarding method provided by an example of the present disclosure;
Figure 5 is a schematic structure diagram of an extension header in a SRv6 packet provided by an example of the present disclosure;
Figure 6 is a schematic flow chart of another packet forwarding method provided by an example of the present disclosure;
Figure 7 is an exemplary schematic diagram of a process of a PE1 device sending a combined packet provided by an example of the present disclosure;
Figure 8 is an exemplary schematic diagram of a process of a PE2 device receiving a combined packet provided by an example of the present disclosure;
Figure 9 is a schematic structure diagram of a packet forwarding apparatus provided by an example of the present disclosure;
Figure 10 is a schematic structure diagram of another packet forwarding apparatus provided by an example of the present disclosure;
Figure 11 is a schematic structure diagram of a network device provided by an example of the present disclosure;
Figure 12 is a schematic structure diagram of another network device provided by an example of the present disclosure.

### DETAILED DESCRIPTION

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure. All other examples obtained based on the examples of the present disclosure by those skilled in the art fall into the scope of protection of the disclosure.

For ease of understanding, firstly, relevant concepts involved in the examples of the present disclosure are introduced.

Each network device in a deterministic internet divides each cycle T into multiple continuous time slices with same duration. Each time slice can be called a Cycle. For example, T can be divided into N time slices, namely Cycle 1 to Cycle N, wherein a value of N can be 10, 100, or 1000, etc., and can be set based on the actual situation.

A deterministic flow with a specified deterministic internet protocol (DIP) is forwarded only within a specified time slice. For example, a deterministic flow 1 is forwarded in Cycle 1 of each cycle T, a deterministic flow 2 is forwarded in Cycle 3 of each cycle T, and a deterministic flow 3 is forwarded in the Cycle 3 of each cycle T, and so forth. Since each deterministic flow corresponds to a certain time slice in each network device in a forwarding path, if a packet arrives at a network device later than a sending time of the time slice of a current cycle T, the packet can be forwarded within the time slice of a next cycle T. Therefore, the delay jitter of packet forwarding can be limited to a delay range with a width of 2T, that is, the delay jitter of forwarding is bounded.

The jitter of each network device in the forwarding path of the deterministic flow will not increase the delay jitter of a network device following the network device, that is, the jitter is independent of the number of network devices included in the forwarding path. However, the increasing in the number of network devices will increase the total delay of a packet in the forwarding path.

The above cycle T is a predefined time slot width of a scheduling queue of the deterministic flow, then the delay jitter for the entire forwarding path is 0~2T. For example, T=10us, the delay jitter is 20us in the worst case, which is independent of a length of the forwarding path and the number of the network devices.

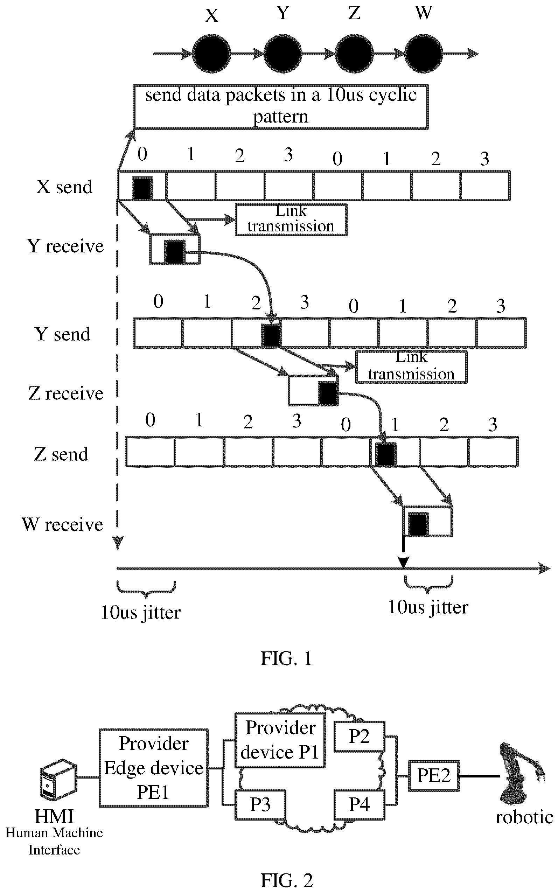

As shown in Figure 1, assuming that X, Y, Z and W are four continuous network devices in the forwarding path. The cyclic forwarding cycle T of each network device consists of four Cycles, namely 0, **1,** 2 and 3. A duration of each Cycle is 10us, that is, the network devices send data packets every 10us in a cyclic pattern. After receiving a packet, each network device sends the packet within a pre-set Cycle corresponding to the deterministic flow to which the packet belongs, that is, each network device is configured with a mapping relationship between the deterministic flow and the Cycle in advance.

For example, the X device sends a packet within the Cycle 0, and the packet is transmitted in a link between the X device and Y device.

After receiving the packet, the Y device sends the packet within the Cycle 2, and then the packet is transmitted in a link between the Y device and Z device.

After receiving the packet, the Z sends the packet within its own Cycle **1,** and then the packet is transmitted in a link between the Z device and W device, and the W can receive the packet.

In the above process, subject to the stable cyclic mapping relationship, once a sending cycle of the packet in the X is determined, a receiving cycle of the packet in the W can also be determined, and the delay jitter of each transmission of the packet of the deterministic flow from the X to W can be controlled within 10us.

It should be noted that a clock can be synchronized among respective network devices in the deterministic internet, and Figure 1 exemplarily shows a situation where the clock is slightly different among the respective network devices.

As shown in Figure 2, Figure 2 is a schematic diagram of a network architecture of a deterministic internet. Taking the deterministic internet between a Human Machine Interface (HMI) and a robotic device as an example, the deterministic internet includes Provider Edge (PE) devices and Provider (P) devices, the P devices referring to network-side core devices. The HMI and robotic device in Figure 2 are both user-side devices.

Figure 2 exemplarily shows PE1, PE2, and P1 to P4, and the number of respective devices is not limited to this in actual implementations.

The PE devices are to implement packet forwarding between the user-side devices and the network-side devices in the deterministic internet.

A SDN controller can plan, for the PE device, an SRv6 forwarding path for a traffic packet entering the deterministic internet from the user-side device in advance, and plan forwarding resources for each hop of the network device in the forwarding path, wherein the forwarding resources can specifically be a next hop, an outcoming interface and Cycle, so that each network device forwards the traffic packet of the deterministic flow according to the specified forwarding resources.

The traffic packet entering the deterministic internet from the user-side device refers to a traffic packet with deterministic service requirements encapsulated through Ethernet and sent by the user-side device, that is, the traffic packet of the deterministic flow.

The deterministic flow is a delay-sensitive traffic flow, and a non-deterministic flow is a delay-insensitive traffic flow. For example, the non-deterministic flow can be a flow that is suitable for the best effort forwarding policy.

The PE device has a user-side interface dedicated to a deterministic flow, and the user-side interface will not be used with the non-deterministic flow. If the user-side interface needs to be used with both the deterministic flow and non-deterministic flow, the deterministic flow can be distinguished from the non-deterministic flow through Time Sensitive Network (TSN) technology.

After the PE device receives the traffic packet sent by the user-side device through the user-side interface, the PE device forwards the traffic packet to the next network device through a network-side interface according to the SRv6 forwarding path planned by the SDN and the specified scheduling cycle, so that the traffic packet is transmitted in the deterministic internet. The traffic packet transmitted in the deterministic internet is a SRv6 packet encapsulated through Ethernet with time synchronization mechanism, that is, After the PE device receives the traffic packet sent by the user-side device, it will encapsulate the traffic packet as the SRv6 packet.

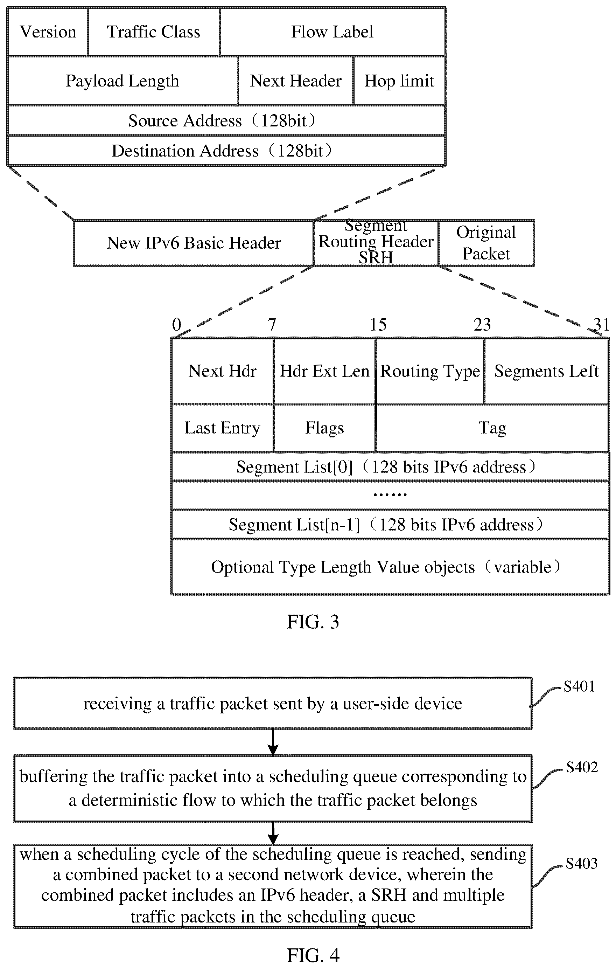

As shown in Figure 3, Figure 3 shows a format of a SRv6 packet, which includes a new Internet Protocol Version 6 (IPv6) basic header, a SRH and an original packet which is the traffic packet sent by the user-side device.

In the examples of the present disclosure, the new IPv6 basic header is referred to as an IPv6 header for short, wherein the IPv6 header includes: a Version, a Traffic Class, a Flow Label, a Payload Length, and a Next header, a Hop limit, a source address (SA), and a Destination Address (DA). The length of the source address and destination address can each be 128 bits. The value of the Next header is 43, indicating that the next header is a routing extension header.

The SRH includes:
Next header (Next Hdr), with a length of 8 bits, to identify the type of a next packet header.

Extension header length (Hdr Ext Len), with a length of 8 bits, indicating the length of an SRH header in a unit of 8 bytes, not including the first 8-byte.

Routing Type, with a length of 8 bits and a value of 4, indicating that it carries the SRH.

Segments Left (SL), with a length of 8 bits, indicating the number of a next SID to be searched, with the initial value of n-1, wherein the n represents the number of SIDs encapsulated in the SRH. Each time it passes through an endpoint node, the value of SL minus 1.

Last Entry, with a length of 8 bits and a value of the number of a first SID in an SID list in the SRH, that is, the number of the SID of the Last Entry in a packet forwarding path.

Flags, with a length of 8 bits, being flag bit information.

Tag, with a length of 16bits, to mark a group of packets with the same characteristics.

Segment List, being a list of SIDs, arranged in order from far to near nodes on the packet forwarding path, that is, a Segment List [0] represents the last SID of the path, and a Segment List [1] represents the penultimate SID of the path, and so forth. Each SID can be a 128 bits IPv6 address.

Optional Type Length Value objects (variable), which are optional type length value objects variable.

The original packet in Figure 3 is the traffic packet sent by the user-side device.

The time synchronization mechanism for respective network devices in the deterministic internet can use a precision time protocol (PTP), an out-of-band time synchronization network, or a synchronous Ethernet, etc.

The network-side interface of the PE device can further receive a SRv6 packet forwarded by the P device and transmit the received SRv6 packet to a destination user-side interface according to the SRv6 forwarding path, and transmit traffic packets to the user-side device at the user-side interface according to the first-come-first-out scheduling mechanism.

The P device is mainly responsible for packet forwarding between network-side devices. An incoming interface of the P device forwards the received SRv6 packet according to the SRv6 forwarding path of the received SRv6 packet and using a pre-specified scheduling cycle.

In deterministic internet architecture, each packet sent by network devices in each Cycle is the SRv6 packet, but the header of the SRv6 packet is longer. According to statistics, for a bandwidth of 100GE, if a CSQF forwarding mechanism is used, a bandwidth for forwarding traffic packets may only account for about 80%, and the remaining 20% or so of bandwidth is to transmit the headers of the SRv6 packets.

In order to improve the bandwidth utilization rate, an example of the present disclosure provides a packet forwarding method, which is applied to a first network device, wherein the first network device is a head node of a SRv6 network, for example, it can be PE1 in Figure 2. As shown in Figure 4, the method includes:
S401, receiving a traffic packet sent by a user-side device.
S402, buffering the traffic packet into a scheduling queue corresponding to a deterministic flow to which the traffic packet belongs.
   After receiving the packet, the first network device can determine a Cycle corresponding to the packet by checking a routing table, and further buffer the packet into the scheduling queue corresponding to the Cycle.
S403, when a scheduling cycle for the scheduling queue is reached, sending a combined packet to a second network device, wherein the combined packet includes an IPv6 header, a SRH and multiple traffic packets in the scheduling queue.

Each scheduling queue corresponding to the deterministic flow corresponds to a scheduling cycle, which is a time slice corresponding to the Cycle. The first network device forwards the packets buffered in each scheduling queue to the second network device according to the scheduling cycle for each scheduling queue.

In an example of the present disclosure, when the scheduling cycle of a scheduling queue is reached, the first network device can encapsulate the packets buffered in the scheduling queue as a combined packet, and send the combined packet to the second network device. As an example, the second network device can be an intermediate node in a forwarding path of traffic packets, such as the P1 device in Figure 2.

The traffic packets buffered in the same scheduling queue have the same forwarding path in the SRv6 network, that is, these traffic packets are forwarded from the same source PE to the same destination PE. Therefore, when each of the traffic packets in the scheduling queue is encapsulated with a SRv6 header normally, the SRv6 headers encapsulated for the traffic packets are the same. Therefore, in an example of the present disclosure, the multiple traffic packets can be encapsulated as a combined packet, so that the multiple traffic packets share the IPv6 header and SRH.

With this method, the first network device can buffer the traffic packet into a scheduling queue corresponding to a deterministic flow to which the traffic packet belongs, and send, when a scheduling cycle of the scheduling queue is reached, the combined packet to the second network device, wherein the combined packet includes an IPv6 header, an SRH, and multiple traffic packets in the scheduling queue. In this way, there is no need to encapsulate the IPv6 header and SRH for each traffic packet separately, and the multiple traffic packets can share one IPv6 header and one SRH, which reduces the transmission bandwidth occupied by the IPv6 header and SRH on and improves bandwidth utilization rate.

It should be noted that a size of the combined packet is less than or equal to a Maximum Transmission Unit (MTU). As an example, the MTU can be 9KB. When encapsulating the respective traffic packets included in a scheduling queue as the combined packet, the first network device can encapsulate the traffic packets into the combined packet in sequence in an order in which the traffic packets enter the scheduling queue. If it is determined that the combined packet will exceed the MTU after encapsulating a certain traffic packet, the first network device will stop the encapsulation will, and construct a next combined packet, and encapsulate this traffic packet and traffic packets following the traffic packet in the scheduling queue into the next combined packet.

In some examples of the present disclosure, the combined packet further includes an extension header which includes a packet length of each traffic packet in the combined packet.

Furthermore, the SRH includes a next header field indicating that a next header after the SRH is the extension header.

The extension header may specifically be a CSQF aggregation extension header, referred to as CSQF_AGG for short. For example, the Next Header field in the SRH of Figure 3 can be defined as the CSQF_AGG. That is, in an example of the present disclosure, the CSQF aggregation extension header can be added at an position after the SRH and adjacent to the SRH.

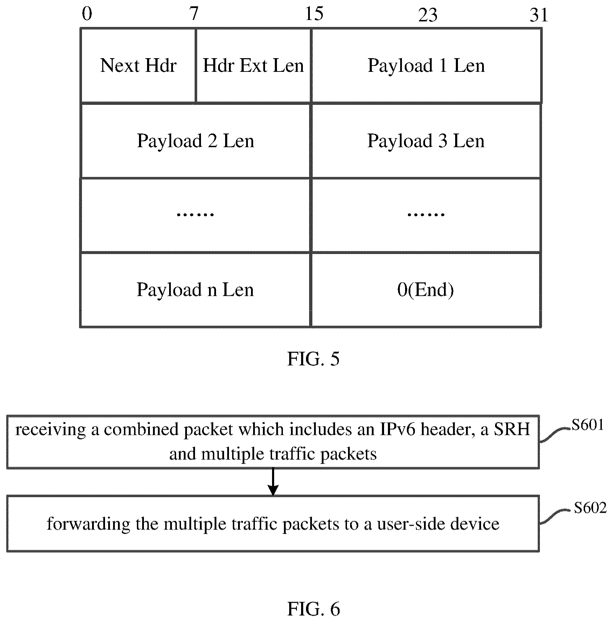

The structure of the extension header is shown in Figure 5. The extension header includes a next header (Next Hdr) field and an extension header length (Hdr Ext Len) field, and the next header field and the extension header length field each occupy 8 bits.

Each packet length included in the extension header occupies 16 bits.

Each traffic packet in the combined packet is a payload, and each packet length included in the extension header is a length of each payload. For example, Figure 3 exemplarily shows the lengths of n payloads, which are payload 1 Len (the length of payload 1), payload 2 Len (the length of payload 2), payload 3 Len (the length of payload 3), ... , payload n Len (the length of payload n).

In the case where a total number of bits occupied by the next header field, the extension header length field and individual packet lengths included in the extension header is not an integral multiple of 32 bits, the extension header further includes an end field of 16 bits with a value of 0. For example, following the payload n Len in Figure 5, the extension header further includes an End field with a value of 0.

It can be understood that in the case where a total number of bits occupied by the next header field, the extension header length field and the individual packet lengths included in the extension header is an integral multiple of 32 bits, the extension header does not include an end field.

Based on the same inventive concept, an example of present disclosure further provides a packet forwarding method, which is applied to a third network device, wherein the third network device is a tail node of an SRv6 network, for example, it can be PE2 in Figure 2. As shown in Figure 6, the method includes:
S601. receiving a combined packet wherein the combined packet includes an IPv6 header, an SRH and multiple traffic packets.
   The multiple traffic packets belong to a same deterministic flow, that is, the multiple traffic packets have the same forwarding path in the SRv6 network.
S602. forwarding the multiple traffic packets to a user-side device.

With this method, the third network device can receive the combined packet including an IPv6 header, an SRH and multiple traffic packets. It can be seen that the multiple traffic packets can share one IPv6 header and one SRH, and the third network device can forward the multiple traffic packets included in the combined packet to the user-side device, without affecting forwarding of the multiple traffic packets to the user-side device normally. In this way, there is no need to add an IPv6 header and an SRH to each traffic packet, which can reduce the transmission bandwidth occupied by the IPv6 header and SRH and improve bandwidth utilization rate.

In the example of the present disclosure, the combined packet further includes an extension header, and the extension header includes a packet length of each traffic packet in the combined packet. Based on this, after receiving the combined packet, the third network device can acquire the multiple traffic packets from the combined packet based on the packet length of each traffic packet included in the extension header. For the specific format of the extension header, please refer to the relevant descriptions in the above examples and would not be described again herein.

Referring to Figure 5, the third network device can read the content with a length of payload 1 Len from the original packet part after the extension header based on the payload 1 Len, to obtain a traffic packet 1. Then the third network device continues to read back the content with a length of payload 2 Len, to obtain a traffic packet 2, and so on, until a traffic packet n is obtained.

When obtaining the traffic packets from the combined packet, the third network device can determine whether all the packet lengths included in the extension header have been obtained based on the value of the Hdr Ext Len field in the extension header. If the number of bits occupied by the acquired packet lengths in the extension header reaches the value of the Hdr Ext Len field, it can be determined that all the packet lengths included in the extension header have been obtained. Optionally, if the end field included in the extension header is read, it can also be determined that all the packet lengths included in the extension header have been obtained.

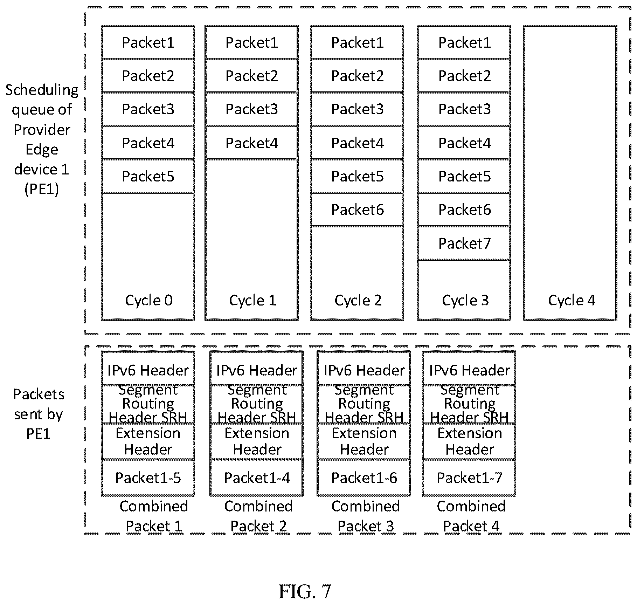

The packet forwarding method provided by the examples of the present disclosure is descripted below with specific instances. As shown in Figure 7, the PE1 device includes 5 scheduling queues, which are CSQF queues corresponding to Cycles 0 to 4.

Assuming that when reaching the Cycle 0, there are 5 traffic packets buffered in the CSQF queue corresponding to the Cycle 0, namely Packets 1-5, the PE1 device encapsulates the Packets 1-5 as a combined packet 1 and sends the combined packet 1, wherein the combined packet 1 includes an IPv6 header, a SRH, a CSQF aggregation extension header and a payload, and the payload includes the Packets 1-5.

It should be noted that since the Packets 1-5 are buffered in the same CSQF queue, representing that the Packets 1-5 will be forwarded from the same source PE device to the same destination PE device along the same path, if the PE1 device encapsulates a SRv6 header for each of the Packets 1-5 respectively, there is need to encapsulate the same SRv6 header for each of the Packets 1-5. In the examples of the present disclosure, the Packets 1-5 can be encapsulated in the combined packet, so that the Packets 1-5 share one SRv6 header. The source IP addresses and destination IP addresses of the Packets 1-5 may be different, that is, the source user-side devices and destination user-side devices corresponding to the Packets 1-5 may be different. Since the IP addresses of the source user-side devices and the IP addresses of the destination user-side devices all are encapsulated in original packets (Packets 1-5), encapsulating the Packets 1-5 in the combined packet will not affect forwarding of the same normally.

Assuming that when reaching Cycle 1, there are 4 traffic packets buffered in the CSQF queue corresponding to Cycle 1, namely Packets 1-4, the PE1 device encapsulates the Packets 1-4 as a combined packet 2 and sends the combined packet 2, wherein the combined packet 2 includes an IPv6 header, a SRH, a CSQF aggregation extension header and a payload, and the payload includes the Packets 1-4.

Assuming that when reaching Cycle 2, there are 6 traffic packets buffered in the CSQF queue corresponding to Cycle 2, namely Packets 1-6, the PE1 device encapsulates the Packets 1-6 as a combined packet 3 and sends the combined packet 3, wherein the combined packet 3 includes an IPv6 header, a SRH, a CSQF aggregation extension header and a payload, and the payload includes the Packets 1-6.

Assuming that when reaching Cycle 3, there are 7 traffic packets buffered in the CSQF queue corresponding to Cycle 3, namely Packets 1-7, the PE1 device encapsulates the Packets 1-7 as a combined packet 4 and sends the combined packet 4, wherein the combined packet 4 includes an IPv6 header, a SRH, a CSQF aggregation extension header and a payload, and the payload includes the Packets 1-7.

There is no packet buffered in the CSQF queue corresponding to Cycle 4.

The above combined packets 1-4 will be forwarded along their respective forwarding paths. When intermediate nodes forwards the combined packets 1-4, there is no need to identify the CSQF aggregation extension headers in the combined packets.

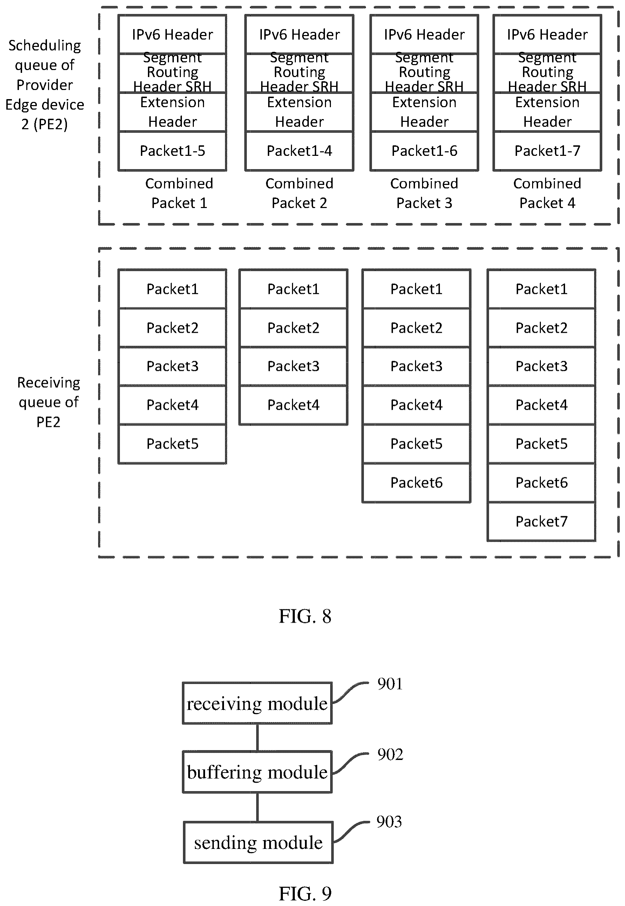

Assuming that the combined packets 1-4 all are forwarded to the PE2 device. As shown in Figure 8, the PE2 device can receive the combined packets 1-4.

The PE2 device can acquire the Packets 1-5 from the combined packet 1 based on the CSQF aggregation extension header in the combined packet 1 and put them into a receiving queue.

The PE2 device can acquire the Packets 1-4 from the combined packet 2 based on the CSQF aggregation extension header in the combined packet 2 and put them into a receiving queue.

The PE2 device can acquire the Packets 1-6 from the combined packet 3 based on the CSQF aggregation extension header in the combined packet 3 and put them into a receiving queue.

The PE2 device can acquire the Packets 1-7 from the combined packet 4 based on the CSQF aggregation extension header in the combined packet 4 and put them into a receiving queue.

The PE2 device can forward respective traffic packets to traffic-side devices based on the headers of the respective traffic packets.

With this method, bandwidth resources occupied by the SRv6 header during CSQF forwarding can be reduced, improving bandwidth utilization rate.

Corresponding to the above method examples, an example of the present disclosure further provides a packet forwarding apparatus, which is applied to a first network device. As shown in Figure 9, the apparatus includes:
a receiving module 901, to receive a traffic packet sent by a user-side device;
a buffering module 902, to buffer the traffic packet into a scheduling queue corresponding to a deterministic flow to which the traffic packet belongs;
a sending module 903, to send a combined packet to a second network device when a scheduling cycle of the scheduling queue is reached, wherein the combined packet includes an IPv6 header, a segment routing header SRH, and multiple traffic packets in the scheduling queue.

Optionally, the combined packet further includes an extension header, and the extension header includes a packet length of each traffic packet in the combined packet.

Optionally, the SRH includes a next header field indicating that a next header after the SRH is an extension header.

Optionally, a size of the combined packet is less than or equal to a maximum transmission unit MTU.

Optionally, the extension header further includes a next header field and an extension header length field;
the next header field and the extension header length field each occupy 8 bits;
each packet length included in the extension header occupies 16 bits;
in the case where a total number of bits occupied by the next header field, the extension header length field and individual packet lengths included in the extension header is not an integral multiple of 32 bits, the extension header further includes an end field, the end field occupies 16 bits and has a value of 0.

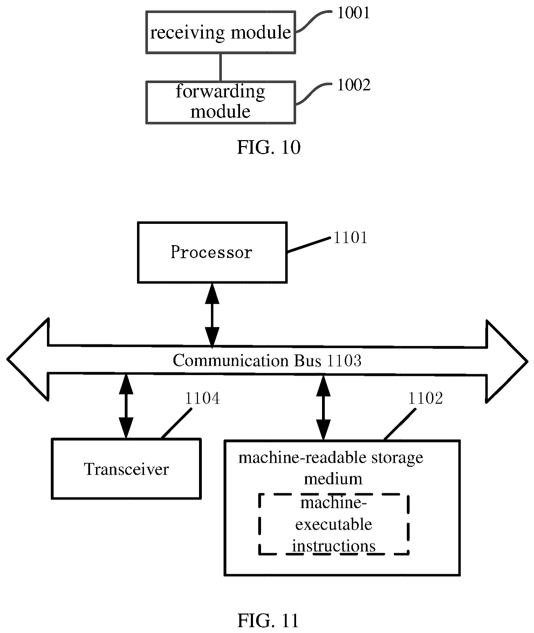

Corresponding to the above method example, an example of the present disclosure further provides a packet forwarding apparatus, which is applied to a third network device. As shown in Figure 10, the apparatus includes:
a receiving module 1001, to receive a combined packet wherein, the combined packet includes an IPv6 header, a segment routing header SRH and multiple traffic packets, and the multiple traffic packets belong to a same deterministic flow;
a forwarding module 1002, to forward multiple traffic packets to a user-side device.

Optionally, the combined packet further includes an extension header which includes a packet length of each traffic packet in the combined packet; the apparatus further includes:
an acquisition module, to acquire the multiple traffic packets from the combined packet based on the packet length of each traffic packet included in the extension header.

Optionally, the SRH includes a next header field indicating that a next header after the SRH is an extension header.

Optionally, a size of the combined packet is less than or equal to the maximum transmission unit MTU.

Optionally, the extension header further includes a next header field and an extension header length field;
the next header field and the extension header length field each occupies 8 bits;
each packet length included in the extension header occupies 16 bits;
in a case where a total number of bits occupied by the next header field, the extension header length field and individual packet lengths included in the extension header is not an integral multiple of 32 bits, the extension header further includes an end field, the end field occupies 16 bits and has a value of 0.

Corresponding to the above method examples, an example of the present disclosure further provides a network device. As shown in Figure **11****,** the network device includes:
a processor 1101;
a transceiver 1104;
a machine-readable storage medium 1102, having stored therein machine-executable instructions that can be executed by a processor 1101, wherein the machine-executable instructions cause the processor 1101 to:
   receive a traffic packet sent by a user-side device;
   buffer the traffic packet into a scheduling queue corresponding to a deterministic flow to which the traffic packet belongs;
   send a combined packet to a second network device when a scheduling cycle of the scheduling queue is reached, wherein the combined packet includes an IPv6 header, a segment routing header SRH, and multiple traffic packets in the scheduling queue.

Optionally, the combined packet further includes an extension header, wherein the extension header includes a packet length of each traffic packet in the combined packet.

Optionally, the SRH includes a next header field indicating that a next header after the SRH is an extension header.

Optionally, a size of the combined packet is less than or equal to the maximum transmission unit MTU.

Optionally, the extension header further includes a next header field and an extension header length field;
the next header field and the extension header length field each occupy 8 bits;
each packet length included in the extension header occupies 16 bits;
in a case where a total number of bits occupied by the next header field, the extension header length field and individual packet lengths included in the extension header is not an integral multiple of 32 bits, the extension header further includes an end field, the end field occupies 16 bits and has a value of 0.

As shown in Figure **11****,** the network device may further include a communication bus 1103. The processor 1101, the machine-readable storage medium 1102, and the transceiver 1104 communicate with each other through the communication bus 1103. The communication bus 1103 may be a Peripheral Component Interconnect (PCI) bus or an Extended Industry Standard Architecture (EISA) bus, etc. The communication bus **1103** can be divided into an address bus, a data bus, a control bus, and the like.

The transceiver 1104 may be a wireless communication module, and the transceiver 1104 performs data interaction with other devices under the control of the processor 1101.

The machine-readable storage medium 1102 may include a Random Access Memory (RAM), or may include a Non-Volatile Memory (NVM), such as at least one magnetic disk memory. In addition, the machine-readable storage medium **1102** may further be at least one storage device located away from the aforementioned processor.

The processor 1101 may be a general-purpose processor, including a Central Processing unit (CPU), a Network Processor (NP), etc.; may also be a Digital Signal Processor (DSP), an Application Specific Integrated Circuit (ASIC), a Field-Programmable Gate Array (FPGA) or other programmable logic devices, discrete gate or transistor logic devices, discrete hardware components.

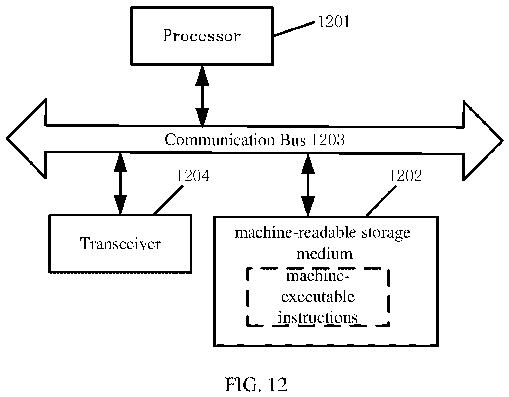

Corresponding to the above method examples, an example of the present disclosure further provides a network device. As shown in Figure 12, the network device includes:
a processor 1201;
a transceiver 1204; and
a machine-readable storage medium 1202, having stored therein machine-executable instructions that can be executed by the processor 1201, wherein the machine-executable instructions cause the processor 1201 to:
   receive a combined packet, wherein the combined packet includes an IPv6 header, a segment routing header SRH and multiple traffic packets, and the multiple traffic packets belong to a same deterministic flow;
   forward the multiple traffic packets to a user-side device.

Optionally, the combined packet further includes an extension header, and the extension header includes a packet length of each traffic packet in the combined packet;
the machine-executable instructions further cause the processor 1201 to:
acquire the multiple traffic packets from the combined packet based on the packet length of each traffic packet included in the extension header.

Optionally, the SRH includes a next header field indicating that a next header after the SRH is an extension header.

Optionally, a size of the combined packet is less than or equal to the maximum transmission unit MTU.

Optionally, the extension header further includes a next header field and an extension header length field;
the next header field and the extension header length field each occupy 8 bits;
each packet length included in the extension header occupies 16 bits;
in a case where a total number of bits occupied by the next header field, the extension header length field and individual packet lengths included in the extension header is not an integral multiple of 32 bits, the extension header further includes an end field, wherein the end field occupies 16 bits and has a value of 0.

As shown in Figure 12, the network device may further include a communication bus 1203. The processor 1201, the machine-readable storage medium 1202, and the transceiver 1204 communicate with each other through the communication bus 1203. The communication bus 1203 may be a Peripheral Component Interconnect (PCI) bus or an Extended Industry Standard Architecture (EISA) bus, etc. The communication bus 1203 can be divided into an address bus, a data bus, a control bus, and the like.

The transceiver 1204 may be a wireless communication module, and the transceiver 1204 performs data interaction with other devices under the control of the processor 1201.

The machine-readable storage medium 1202 may include a Random Access Memory (RAM), and may also include a Non-Volatile Memory (NVM), such as at least one magnetic disk memory. In addition, the machine-readable storage medium may also be at least one storage device located away from the aforementioned processor.

The processor 1201 may be a general-purpose processor, including a Central Processing unit (CPU), a Network Processor (NP), etc.; and may also be a Digital Signal Processor (DSP), an Application Specific Integrated Circuit (ASIC), a Field-Programmable Gate Array (FPGA) or other programmable logic devices, discrete gate or transistor logic devices, discrete hardware components.

Based on the same inventive concept, according to the packet forwarding methods provided by the above-mentioned examples of the present disclosure, an example of the present disclosure further provides a machine-readable storage medium, having stored therein machine-executable instructions that can be executed by the processor. The machine-executable instructions cause the processor to carry out any of the above packet forwarding methods.

In yet another example provided by the present disclosure, it is also provided a computer program product including instructions which, when running on a computer, causes the computer to carry out any of the packet forwarding methods in the above examples.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one.." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the example of the apparatus, the description is relatively simple because it is basically similar to the example of the method, and the relevant points can be referred to the partial description of the example of the method.

The above descriptions are only preferred examples of the present disclosure, and are not intended to limit the present disclosure. Any modifications, equivalent replacements, improvements and the like made within the spirit and principles of the present disclosure shall be included within the scope of protection of the present disclosure.

## Claims

1. A packet forwarding method, which is applied to a first network device, comprising:
receiving a traffic packet sent by a user-side device;
buffering the traffic packet into a scheduling queue corresponding to a deterministic flow to which the traffic packet belongs;
when a scheduling cycle of the scheduling queue is reached, sending a combined packet to a second network device, wherein the combined packet comprises an IPv6 header, a segment routing header SRH and multiple traffic packets in the scheduling queue.

2. The method according to claim 1, wherein the combined packet further comprises an extension header, and the extension header comprises a packet length of each traffic packet in the combined packet.

3. The method according to claim 2, wherein the SRH comprises a next header field indicating that a next header after the SRH is the extension header.

4. The method according to any one of claims 1 to 3, wherein a size of the combined packet is less than or equal to a maximum transmission unit MTU.

5. The method according to claim 2, wherein the extension header further comprises a next header field and an extension header length field;
the next header field and the extension header length field each occupy 8 bits;
each packet length comprised in the extension header occupies 16 bits;
in a case where a total number of bits occupied by the next header field, the extension header length field and individual packet lengths comprised in the extension header is not an integral multiple of 32 bits, the extension header further comprises an end field, wherein the end field occupies 16 bits and has a value of 0.

6. A packet forwarding method, which is applied to a third network device, comprising:
receiving a combined packet, wherein the combined packet comprises an IPv6 header, a segment routing header SRH, and multiple traffic packets which belong to a same deterministic flow;
forwarding the multiple traffic packets to a user-side device.

7. The method according to claim 6, wherein the combined packet further comprises an extension header, and the extension header comprises a packet length of each traffic packet in the combined packet; after receiving the combined packet, the method further comprises:
acquiring the multiple traffic packets from the combined packet based on the packet length of each traffic packet comprised in the extension header.

8. The method according to claim 7, wherein the SRH comprises a next header field indicating that a next header after the SRH is the extension header.

9. The method according to any one of claims 6 to 8, wherein a size of the combined packet is less than or equal to a maximum transmission unit MTU.

10. The method according to claim 7, wherein the extension header further comprises a next header field and an extension header length field;
the next header field and the extension header length field each occupy 8 bits;
each packet length comprised in the extension header occupies 16 bits;
in a case where a total number of bits occupied by the next header field, the extension header length field and individual packet lengths comprised in the extension header is not an integral multiple of 32 bits, the extension header further comprises an end field, wherein the end field occupies 16 bits and has a value of 0.

11. A packet forwarding apparatus, which is applied to a first network device, comprising:
a receiving module, to receive a traffic packet sent by a user-side device;
a buffering module, to buffer the traffic packet into a scheduling queue corresponding to a deterministic flow to which the traffic packet belongs;
a sending module, to send a combined packet to a second network device when a scheduling cycle of the scheduling queue is reached, wherein the combined packet comprises an IPv6 header, a segment routing header SRH, and multiple traffic packets in the scheduling queue.

12. The apparatus according to claim **11,** wherein the combined packet further comprises an extension header, and the extension header comprises a packet length of each traffic packet in the combined packet.

13. The apparatus according to claim 12, wherein the SRH comprises a next header field indicating that a next header after the SRH is the extension header.

14. The apparatus according to any one of claims 11 to 13, wherein a size of the combined packet is less than or equal to a maximum transmission unit MTU.

15. The apparatus according to claim 12, wherein the extension header further comprises a next header field and an extension header length field;
the next header field and the extension header length field each occupy 8 bits;
each packet length comprised in the extension header occupies 16 bits;
in a case where a total number of bits occupied by the next header field, the extension header length field and individual packet lengths comprised in the extension header is not an integral multiple of 32 bits, the extension header further comprises an end field, wherein the end field occupies 16 bits has a value of 0.

16. A packet forwarding apparatus, which is applied to a third network device, comprising:
a receiving module, to receive a combined packet, wherein the combined packet comprises an IPv6 header, a segment routing header SRH, and multiple traffic packets which belong to a same deterministic flow;
a forwarding module, to forward the multiple traffic packets to a user-side device.

17. The apparatus according to claim 16, wherein the combined packet further comprises an extension header, and the extension header comprises a packet length of each traffic packet in the combined packet; the apparatus further comprises:
an acquisition module, to acquire the multiple traffic packets from the combined packet based on the packet length of each traffic packet comprised in the extension header.

18. The apparatus according to claim 17, wherein the SRH comprises a next header field indicating that a next header after the SRH is the extension header.

19. The apparatus according to any one of claims 16 to 18, wherein a size of the combined packet is less than or equal to a maximum transmission unit MTU.

20. The apparatus according to claim 17, wherein the extension header further comprises a next header field and an extension header length field;
the next header field and the extension header length field each occupy 8 bits;
each packet length comprised in the extension header occupies 16 bits;
in a case where a total number of bits occupied by the next header field, the extension header length field and individual packet lengths comprised in the extension header is not an integral multiple of 32 bits, the extension header further comprises an end field, wherein the end field occupies 16 bits and has a value of 0.

21. A network device, comprising:
a processor;
a transceiver;
a machine-readable storage medium having stored therein machine-executable instructions that can be executed by the processor, wherein the machine-executable instructions cause the processor to:
receive a traffic packet sent by a user-side device;
buffer the traffic packet into a scheduling queue corresponding to a deterministic flow to which the traffic packet belongs;
when a scheduling cycle of the scheduling queue is reached, send a combined packet to a second network device, wherein the combined packet comprises an IPv6 header, a segment routing header SRH, and multiple traffic packets in the scheduling queue.

22. The network device according to claim 21, wherein the combined packet further comprises an extension header, and the extension header comprises a packet length of each traffic packet in the combined packet.

23. The network device according to claim 22, wherein the SRH comprises a next header field indicating that a next header after the SRH is the extension header.

24. The network device according to any one of claims 21 to 23, wherein a size of the combined packet is less than or equal to a maximum transmission unit MTU.

25. The network device according to claim 22, wherein the extension header further comprises a next header field and an extension header length field;
the next header field and the extension header length field each occupy 8 bits;
each packet length comprised in the extension header occupies 16 bits;
in a case where a total number of bits occupied by the next header field, the extension header length field and individual packet lengths comprised in the extension header is not an integral multiple of 32 bits, the extension header further comprises an end field, wherein the end field occupies 16 bits and has a value of 0.

26. A network device, comprising:
a processor;
a transceiver;
a machine-readable storage medium having stored therein machine-executable instructions that can be executed by the processor, wherein the machine-executable instructions cause the processor to:
receive a combined packet, wherein the combined packet comprises an IPv6 header, a segment routing header SRH, and multiple traffic packets which belong to a same deterministic flow;
forward the multiple traffic packets to a user-side device.

27. The network device according to claim 26, wherein the combined packet further comprises an extension header, and the extension header comprises a packet length of each traffic packet in the combined packet;
the machine-executable instructions further cause the processor to:
acquire the multiple traffic packets from the combined packet based on the packet length of each traffic packet comprised in the extension header.

28. The network device according to claim 27, wherein the SRH comprises a next header field indicating that a next header after the SRH is the extension header.

29. The network device according to any one of claims 26 to 28, wherein a size of the combined packet is less than or equal to a maximum transmission unit MTU.

30. The network device according to claim 27, wherein the extension header further comprises a next header field and an extension header length field;
the next header field and the extension header length field each occupy 8 bits;
each packet length comprised in the extension header occupies 16 bits;
in a case where a total number of bits occupied by the next header field, the extension header length field and individual packet lengths comprised in the extension header is not an integral multiple of 32 bits, the extension header further comprises an end field, wherein the end field occupies 16 bits and has a value of 0.

31. A machine-readable storage medium having stored therein machine-executable instructions that, when called and executed by a processor, cause the processor to carry out the method according to any one of claims 1 to 5 or claims 6 to 10.

32. A computer program product, which causes a processor to carry out the method according to any one of claims 1 to 5 or claims 6 to 10.
